# EUROPÄISCHE PATENTSCHRIFT

(11) **EP 3 807 982 B1**
(45) Veröffentlichungstag und Bekanntmachung des Hinweises auf die Patenterteilung: **28.02.2024**
(21) Anmeldenummer: 19778846.6
(22) Anmeldetag: 16.09.2019
(51) Int. Cl.: H02K 15/00

(54) **VERFAHREN ZUR HERSTELLUNG EINER WICKELKOPFANORDNUNG FÜR EINE ELEKTRISCHE ROTIERENDE MASCHINE**
METHOD FOR PRODUCING A WINDING HEAD ASSEMBLY FOR AN ELECTRIC ROTATING MACHINE
PROCÉDÉ DE FABRICATION D'UN DISPOSITIF DE TÊTE D'ENROULEMENT POUR UNE MACHINE ROTATIVE ÉLECTRIQUE

(30) Priorität: 21.09.2018 EP 18195858
(43) Veröffentlichungstag der Anmeldung: 21.04.2021
(73) Patentinhaber: Innomotics GmbH, 90441 Nürnberg (DE)
(72) Erfinder: BRACH, Karsten, 13589 Berlin (DE); JENSEN, Jens Dahl, 14050 Berlin (DE); KÜMMLEE, Horst, 13505 Berlin (DE); RAUCH, Hartmut, 12203 Berlin (DE); REHME, Olaf, 20148 Hamburg (DE); SCHNECK, Jakob, 10245 Berlin (DE); SEIBICKE, Frank, 14822 Borkheide (DE); STIER, Oliver, 12163 Berlin (DE); ZEGENHAGEN, Mark Tobias, 10115 Berlin (DE)
(74) Vertreter: Siemens Patent Attorneys
(86) Internationale Anmeldenummer: PCT/EP2019/074645
(87) Internationale Veröffentlichungsnummer: WO 2020/058164

(56) Entgegenhaltungen:
- EP-A1- 3 364 524
- WO-A1-2016/143008
- US-A- 5 185 918
- US-A1- 2015 076 951

## Beschreibung

Die Erfindung betrifft ein Verfahren zur Herstellung einer Wickelkopfanordnung für eine elektrische rotierende Maschine.

Die Erfindung betrifft ferner eine Wickelkopfanordnung für eine elektrische rotierende Maschine, welche nach einem derartigen Verfahren hergestellt ist.

Darüber hinaus betrifft die Erfindung einen Stator für eine elektrische rotierende Maschine, welcher ein magnetfeldführendes Statorelement und mindestens eine derartige Wickelkopfanordnung aufweist.

Die Erfindung betrifft überdies eine elektrische rotierende Maschine mit mindestens einem derartigen Stator.

Üblicherweise werden die Statorwicklungen einer derartigen elektrischen rotierenden Maschine, welche mit einer Leistung von mindestens einem Megawatt betreibbar ist, als Formspulen, ausgeführt. Formspulen werden beispielsweise mittels Ziehen, Gießen oder Pulvermetallurgie hergestellt. An den Enden der Formspulen befindet sich ein Wickelkopf, der durch Biegen und Abkröpfen der Leiter der Formspulen entsteht. Dieser Wickelkopf benötigt einen erheblichen axialen Bauraum. Durch die zusätzliche inaktive Leiterlänge des Wickelkopfes entstehen ohmsche Verluste, die den Wirkungsgrad der elektrischen rotierenden Maschine verringern. Darüber hinaus ist es erforderlich, die Wickelköpfe zu kühlen. Zur Kühlung wird weiterer Bauraum benötigt.

Insbesondere bei schnelllaufenden niederpoligen Maschinen wirkt sich der durch die Wickelköpfe vergrößerte Lagerabstand nachteilig auf die Rotordynamik aus. Ferner sind zusätzliche aufwändige Versteifungsmaßnahmen aufgrund der großen Leiterlängen erforderlich, um unzulässige Schwingungen und Verformungen im Betrieb zu verhindern. Darüber hinaus erhöhen sich die Gesamtlänge und das Gewicht der elektrischen rotierenden Maschine. Insbesondere bei einem modularen Aufbau großer Maschinen, bei dem mehrere Teilmaschinen in Axialrichtung eine Gesamtmaschine bilden, entstehen aufgrund der Wickelköpfe erhebliche elektrisch nicht genutzte Längen.

Die Wickelköpfe der Formspulen werden mit hohem Aufwand halbautomatisch gefertigt, beispielsweise indem Kupferleiter so gebogen werden, dass sie passend in die Nuten platzierbar sind. Eine anschließende Verbindung der jeweiligen Kupferleiter, eine Isolierung der Verbindungsstellen und eine Versteifung der Kupferleiter gegeneinander erfolgt manuell unter hohem Aufwand. Prinzip bedingt ist es nur unter hohem Aufwand, beispielsweise unter Verwendung unterschiedlicher Leiterlängen, welche durch Löten verbunden werden, möglich, unterschiedliche Leitergeometrien in den Nuten und in den Wickelköpfen zu realisieren.

Bei Zahnspulenwicklungen insbesondere in Flachdrahtausführung kann der Abstand benachbarter Nuten nur so klein sein, wie es der einzuhaltende Biegeradius des isolierten Kupferleiters erlaubt.

Die Patentschrift DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, wobei die Rohspule zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten auf, die dafür vorgesehen sind, jeweils einen Wickelkopf der Formspule zu bilden, wobei die Längsseiten um 90° derart gebogen werden, um die Längsseiten in die Nuten einzulegen und die Wickelkopfseiten von den Längsseiten abzukröpfen.

Die Patentschrift EP 1 742 330 B1 beschreibt einen Ständerwickelkopf für ein Ständerteil eines Turbogenerators. Der Ständerwickelkopf ist in Form einer Scheibe mit einer mittigen Auslassung zur Durchführung eines Läufers gebildet, wobei die Scheibe einen isolierenden Grundkörper aufweist, in den eine elektrische Verbindung zur Kontaktierung eines Ständerleiters integriert ist. Die Kontaktierung wird in Form einer Steckverbindung und/oder mit Durchkontaktierungen hergestellt.

Die Offenlegungsschrift EP 3 297 131 A1 beschreibt einen Stator für eine elektrische rotierende Maschine, welcher ein Statorblechpaket mit Spulenstäben und mindestens eine Statorwickelkopfplatine mit einem isolierenden Grundkörper aufweist. Um die axiale Länge des Stators zu verringern, wird vorgeschlagen, dass in den isolierenden Grundkörper Leiterbahnen integriert sind, wobei die mindestens eine Statorwickelkopfplatine auf einer Stirnseite des Statorblechpakets aufliegt und wobei die Leiterbahnen mit den Spulenstäben stoffschlüssig verbunden sind.

Die Offenlegungsschrift EP 3 364 524 A1 beschreibt ein Verfahren zur Herstellung einer Wickelkopfanordnung für eine elektrische rotierende Maschine mit mindestens einem isolierenden Grundkörper, welcher zumindest teilweise aus einem dielektrischen Werkstoff hergestellt ist, wobei eine Mehrzahl von Leitern aus einem metallischen Werkstoff über zumindest je eine Zwischenschicht mit dem isolierenden Grundkörper verbunden werden, wobei die Zwischenschicht aus einem Werkstoff, welcher sich vom dielektrischen Werkstoff und vom metallischen Werkstoff unterscheidet, hergestellt wird, wobei die Leiter mittels eines ersten thermischen Spritzverfahrens auf die Zwischenschicht aufgesprüht werden, wobei die Zwischenschicht zumindest über eine formschlüssige Verbindung mit dem isolierenden Grundkörper verbunden wird, wobei die Zwischenschicht zumindest teilweise in Nuten des isolierenden Grundkörpers angeordnet wird, wobei die Leiter in zumindest zwei Ebenen angeordnet werden.

Der Erfindung liegt die Aufgabe zugrunde, ein Verfahren zur Herstellung einer Wickelkopfanordnung für eine elektrische rotierende Maschine anzugeben, welches, im Vergleich zum Stand der Technik, einfacher und kostengünstiger ist.

Die Aufgabe wird erfindungsgemäß durch ein Verfahren zur Herstellung einer Wickelkopfanordnung für eine elektrische rotierende Maschine gemäß Anspruch 1 gelöst. Bei dem Verfahren zur Herstellung einer Wickelkopfanordnung für eine elektrische rotierende Maschine mit mindestens einem isolierenden Grundkörper, welcher zumindest teilweise aus einem dielektrischen Werkstoff hergestellt ist, wird eine Mehrzahl von Leitern aus einem metallischen Werkstoff über zumindest je eine Zwischenschicht mit dem isolierenden Grundkörper verbunden, wobei die Zwischenschicht aus einem Werkstoff, welcher sich vom dielektrischen Werkstoff und vom metallischen Werkstoff unterscheidet, hergestellt wird, wobei die Leiter mittels eines ersten thermischen Spritzverfahrens, insbesondere mittels Kaltgasspritzen, auf die Zwischenschicht aufgesprüht werden, wobei die Zwischenschicht aus Silber, Aluminium, Antimon, Magnesium, Zinn, Zink, Blei, Tantal oder aus einer Mischung und/oder aus mindestens einer Legierung davon hergestellt wird.

Ferner wird die Aufgabe erfindungsgemäß durch eine Wickelkopfanordnung für eine elektrische rotierende Maschine gemäß Anspruch 9 gelöst. Bei der Wickelkopfanordnung sind eine Mehrzahl von Leitern aus einem metallischen Werkstoff über zumindest je eine Zwischenschicht mit dem isolierenden Grundkörper verbunden, wobei die Zwischenschicht aus einem Werkstoff, welcher sich vom dielektrischen Werkstoff und vom metallischen Werkstoff unterscheidet, hergestellt ist, wobei die Leiter mittels eines ersten thermischen Spritzverfahrens auf die Zwischenschicht aufgesprüht sind, wobei die Zwischenschicht aus Silber, Aluminium, Antimon, Magnesium, Zinn, Zink, Blei, Tantal oder aus einer Mischung und/oder aus mindestens einer Legierung davon hergestellt ist.

Darüber hinaus wird die Aufgabe erfindungsgemäß durch einen Stator für eine elektrische rotierende Maschine nach Anspruch 10 gelöst. Der Stator weist ein magnetfeldführendes Statorelement und mindestens eine derartige Wickelkopfanordnung auf. Zudem wird die Aufgabe erfindungsgemäß durch eine elektrische rotierende Maschine gemäß Anspruch 13 gelöst.

Der Erfindung liegt die Überlegung zugrunde, die Herstellung einer Wickelkopfanordnung durch die Verwendung eines thermischen Spritzverfahrens zu optimieren, indem Leiter der Wickelkopfanordnung durch Aufspritzen von metallischen Festkörperpartikeln, sogenannten Spritzpartikeln, auf einen isolierenden Grundkörper über eine Zwischenschicht hergestellt werden. Durch das Aufsprühen der Spritzpartikel wird eine dichte und fest haftende Schicht gebildet. Thermische Spritzverfahren sind beispielsweise Lichtbogenspritzen, Plasmaspritzen, Flammspritzen oder Kaltgasspritzen. Die Spritzpartikel enthalten beispielsweise Kupfer, während der isolierende Grundkörper aus einem dielektrischen Werkstoff, beispielsweise aus einem Kunststoff oder einem keramischen Werkstoff, hergestellt ist. Alternativ weist der isolierende Grundkörper eine, beispielsweise elektrisch leitfähige, Grundplatte auf, welche, zumindest im Bereich der Leiter, mit einer isolierenden Schicht aus einem dielektrischen Werkstoff, beispielsweise aus einem Kunststoff oder einem keramischen Werkstoff, beschichtet ist.

Um dennoch eine Beschädigung des isolierenden Grundkörpers zu vermeiden, wird darauf eine Zwischenschicht aus einem Werkstoff, welcher sich vom dielektrischen Werkstoff und vom metallischen Werkstoff unterscheidet, angeordnet, auf welche die Spritzpartikel aufgesprüht werden. Die Zwischenschicht ist mit dem dielektrischen Werkstoff des isolierenden Grundkörpers verbunden und wird beispielsweise aus Silber (Ag), Aluminium, Antimon, Magnesium, Zinn, Zink, Blei, Tantal oder aus einer Mischung und/oder aus mindestens einer Legierung davon hergestellt. Mit Hilfe eines thermischen Spritzverfahrens sind, im Vergleich zu anderen additiven Fertigungsverfahren, dicke Schichten, beispielsweise im Millimeterbereich und im Zentimeterbereich, in kurzer Zeit und geometrisch sehr flexibel herstellbar. Durch ein thermisches Spritzverfahren wird der Fertigungsprozess somit einfacher und kostengünstiger.

In einer bevorzugten Ausführungsform werden die Leiter mittels Kaltgasspritzen auf die Zwischenschicht aufgesprüht. Beim Kaltgasspritzen handelt es sich um ein thermisches Spritzverfahren, wobei die Spritzpartikel auf eine so hohe Geschwindigkeit beschleunigt werden, dass sie im Gegensatz zu anderen thermischen Spritzverfahren auch ohne vorangehendes An- oder Aufschmelzen beim Aufprall auf das Substrat eine dichte und fest haftende Schicht bilden. Da das mittels Kaltgasspritzen aufgetragene Material nicht geschmolzen, sondern durch seine kinetische Energie verformt wird, sind die Zwischenschicht und der dielektrische Grundkörper, im Vergleich zu anderen thermischen Spritzverfahren, nur sehr geringen Temperaturbelastungen ausgesetzt.

Erfindungsgemäß wird die Zwischenschicht zumindest über eine formschlüssige Verbindung mit dem isolierenden Grundkörper verbunden. Durch eine, insbesondere zusätzliche, formschlüssige Verbindung wird die Wickelkopfanordnung vor beispielsweise thermischen und/oder mechanischen, äußeren Einflüssen geschützt.

Erfindungsgemäß wird die Zwischenschicht mittels eines zweiten thermischen Spritzverfahrens, insbesondere mittels Kaltgasspritzen, auf den isolierenden Grundkörper aufgesprüht, wobei sich das zweite thermische Spritzverfahren vom ersten thermischen Spritzverfahren unterscheidet. Während der metallische Werkstoff der Leiter eine möglichst hohe elektrische Leitfähigkeit aufweist, ist der Werkstoff der Zwischenschicht dafür geeignet, eine mechanisch und thermisch stabile Verbindung zwischen dem dielektrischen Grundkörper und den jeweiligen Leitern auszubilden. Erfindungsgemäß ist das zweite thermische Spritzverfahren daraufhin optimiert, die Zwischenschicht schonend auf den dielektrischen Grundkörper aufzubringen. Darüber hinaus wird die Zwischenschicht mit einem thermischen Spritzverfahren aufgesprüht, um ein durchgängiges und einheitlichen Fertigungsverfahren zu realisieren.

Erfindungsgemäß unterscheidet sich das zweite thermische Spritzverfahren hinsichtlich einer Geschwindigkeit und/oder einer Größe der Partikel vom ersten thermischen Spritzverfahren. Beispielsweise bei der Verwendung eines weichen Werkstoffs wie Zinn ist eine geringere kinetische Energie erforderlich, damit die Festkörperpartikel beim Auftreffen eine dichte, fest haftende Schicht bilden. Dadurch werden Beschädigungen des dielektrischen Grundkörpers vermieden.

Erfindungsgemäß wird die Zwischenschicht zumindest teilweise in Nuten des isolierenden Grundkörpers angeordnet. Durch eine Anordnung in Nuten ist die Zwischenschicht robust gegenüber äußeren Einflüssen.

Erfindungsgemäß weisen die Nuten des isolierenden Grundkörpers eine Profilierung auf, über welche die formschlüssige Verbindung hergestellt wird. Beispielsweise ist die Profilierung schwalbenschwanzförmig oder hammerkopfförmig ausgestaltet. Durch die Profilierung wird die formschlüssige Verbindung stabilisiert.

In einer vorteilhaften Ausführungsform wird in einem weiteren Schritt eine elektrische Isolation aufgebracht. Durch eine elektrische Isolation werden beispielsweise Kurzschlüsse zwischen den Leitern verhindert.

Besonders vorteilhaft werden Kühlkanäle im isolierenden Grundkörper angeordnet. Durch die Kühlkanäle strömt zur Kühlung während des Betriebes ein Kühlfluid, welches die in den Leitern entstehende Wärme abführt. Insbesondere bei der Verwendung eines isolierender Grundkörper mit geringer Wärmeleitfähigkeit ist es erforderlich, die Leiter über Kühlkanäle zu kühlen.

Erfindungsgemäß werden die Leiter in zumindest zwei, insbesondere in Axialrichtung hintereinander angeordneten, Ebenen angeordnet. Durch eine Anordnung in Ebenen wird der benötigte Bauraum der Wickelkopfanordnung reduziert.

Erfindungsgemäß werden die Leiter der zumindest zwei Ebenen über Verbindungselemente miteinander verbunden. Ein Verbindungselement ist beispielsweise ein Leiterelement, welches mit einem Leiter der ersten Ebene und einem Leiter der zweiten Ebene unlösbar verbunden ist. Durch ein derartiges Verbindungselement ist die Wickelkopfanordnung auch bei sehr hoher mechanischer und/oder thermischer Beanspruchung stabil.

Bei einer weiteren vorteilhaften Ausgestaltung wird ein dielektrischer Werkstoff mit einer Durchschlagsfestigkeit von mindestens 10 kV/mm verwendet. Derartige dielektrische Werkstoffe sind beispielsweise thermoplastische Kunststoffe wie Plexiglas und PVC, glasfaserverstärkte Epoxidharze, welche optional Glimmer enthalten, oder keramische Werkstoffe wie Aluminiumoxid. Durch einen Werkstoff mit einer derartig hohen Durchschlagfestigkeit ist es möglich, den Abstand zwischen den Leitern zu verkleinern und den Platzbedarf der Wickelkopfanordnung zu reduzieren.

Besonders vorteilhaft wird ein metallischer Werkstoff verwendet, welcher eine höhere elektrische Leitfähigkeit und/oder eine höhere Festigkeit als der Werkstoff der Zwischenschicht aufweist. Beispielsweise wird als metallischer Werkstoff Kupfer oder eine Kupferlegierung verwendet während die Zwischenschicht beispielsweise Zinn enthält. Durch derartige Werkstoffe wird eine einfache und kostengünstige Herstellung einer Wickelkopfanordnung mit einer hohen Stromtragfähigkeit und hohen mechanischen Stabilität ermöglicht.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine,
- FIG 2: eine dreidimensionale Darstellung einer Wickelkopfanordnung für eine elektrische rotierende Maschine,
- FIG 3: einen vergrößerten Querschnitt einer ersten Ausführungsform einer Wickelkopfanordnung,
- FIG 4: einen Querschnitt von Leitern einer Wickelkopfanordnung,
- FIG 5: eine schematische Darstellung eines Verfahrens zur Herstellung einer Wickelkopfanordnung,
- FIG 6: einen vergrößerten Querschnitt einer zweiten Ausführungsform einer Wickelkopfanordnung,
- FIG 7: einen vergrößerten Querschnitt einer dritten Ausführungsform einer Wickelkopfanordnung.

Bei den im Folgenden erläuterten Ausführungsbeispielen handelt es sich um bevorzugte Ausführungsformen der Erfindung.

Gleiche Bezugszeichen haben in den verschiedenen Figuren die gleiche Bedeutung.

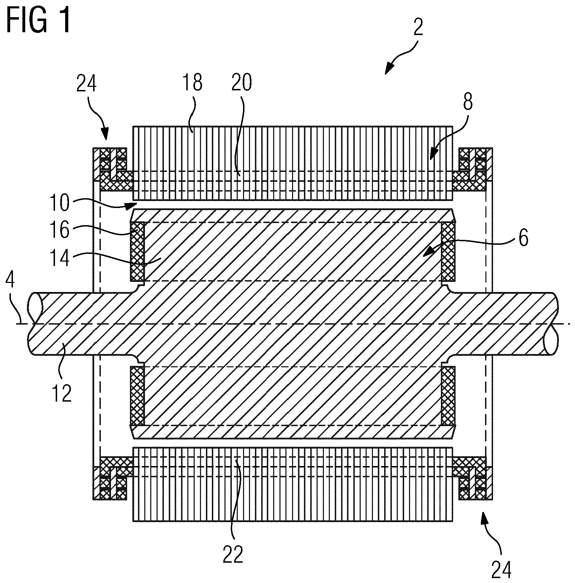

FIG 1 zeigt einen Längsschnitt einer elektrischen rotierenden Maschine 2, welche beispielhaft als Synchronmaschine ausgeführt ist. Die Synchronmaschine weist einen um eine Rotationsachse 4 rotierbaren Rotor 6, der exemplarisch als Schenkelpolläufer ausgeführt ist, und einen den Rotor 6 umgebenden Stator 8 auf. Zwischen dem Rotor 6 und dem Stator 8 befindet sich ein Spalt 10, der insbesondere als Luftspalt ausgeführt ist. Die Rotationsachse 4 definiert eine Axialrichtung, eine Radialrichtung und eine Umfangsrichtung. Der Rotor 6 umfasst eine Welle 12 und Schenkelpole 14 mit einer Erregerwicklung 16. Alternativ weist der Rotor 6 Permanentmagnete oder einen Kurzschlusskäfig auf.

Der Stator 8 umfasst ein magnetfeldführendes, insbesondere wirbelstromunterdrückendes, Statorelement 18, welches beispielsweise als Blechpaket ausgeführt ist, und eine Statorwicklung 20. Die Statorwicklung 20 umfasst Spulenstäbe 22, welche beispielsweise aus Kupfer hergestellt sind und in Axialrichtung durch das magnetfeldführende Statorelement 18 verlaufen. Die axialen Enden der Spulenstäbe 22 sind jeweils mit einer Wickelkopfanordnung 24 verbunden. Anschlüsse der Statorwicklung 20, beispielsweise an einen Klemmenkasten, sind aus Gründen der Übersichtlichkeit nicht dargestellt.

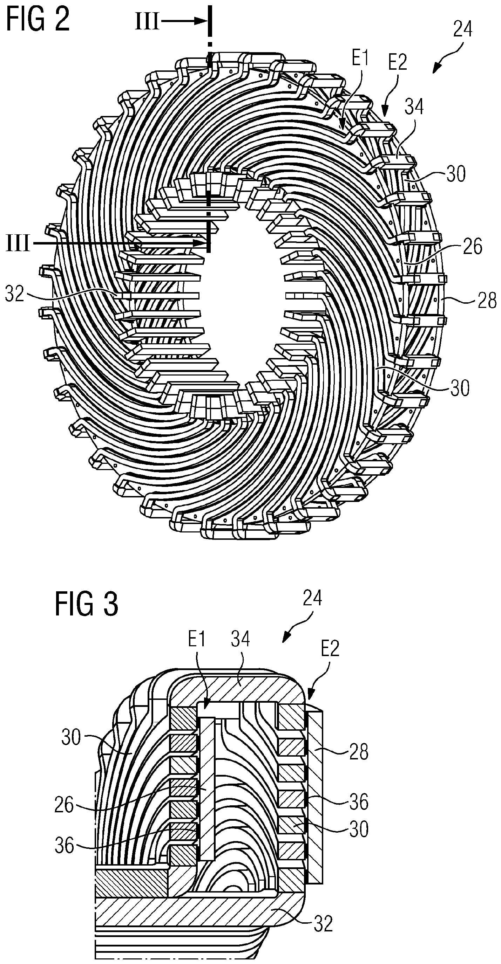

FIG 2 zeigt eine dreidimensionale Darstellung einer Wickelkopfanordnung 24 für eine elektrische rotierende Maschine 2. Die Wickelkopfanordnung 24 umfasst beispielhaft zwei in Axialrichtung hintereinander angeordnete Ebenen E1, E2 mit jeweils einem isolierenden Grundkörper 26, 28. Die Wickelkopfanordnung 24 ist für eine Zweischichtwicklung vorgesehen. Der isolierende Grundkörper 26, 28 weist im Wesentlichen eine hohlzylindrische Form auf und ist aus einem dielektrischen Werkstoff, beispielsweise aus einem Kunststoff oder einem keramischen Werkstoff, mit einer Durchschlagsfestigkeit von mindestens 10 kV/mm hergestellt. Jeder Ebene ist eine Mehrzahl von Leitern 30 zugeordnet, wobei die Leiter 30 mit dem jeweiligen isolierenden Grundkörper 26, 28 verbunden sind. Die Leiter 30 weisen beispielhaft einen rechteckigen oder quadratischen Leiterquerschnitt auf und sind aus einem metallischen Werkstoff, insbesondere Kupfer, mit einer Leitfähigkeit von mindestens 50 MS/m hergestellt. An den Leitern 30 sind metallische Verbindungsabschnitte 32 angeordnet, um eine Verbindung der Leiter 30 zu den jeweiligen Spulenstäben 22 herzustellen. Darüber hinaus sind die Leiter 30 der jeweiligen Ebenen E1, E2 über elektrisch leitfähige Verbindungselemente 34 verbunden. Beispielsweise sind die Verbindungselemente 34 aus Kupfer hergestellt. Die weitere Ausgestaltung der Wickelkopfanordnung 24 in FIG 2 entspricht der in FIG 1.

FIG 3 zeigt einen vergrößerten Querschnitt einer ersten Ausführungsform einer Wickelkopfanordnung 24. Die Leiter 30 sind über zumindest je eine Zwischenschicht 36 mit dem jeweiligen isolierenden Grundkörper 26, 28 verbunden, wobei die Zwischenschicht 36 ein Leiterfundament bildet und über eine formschlüssige Verbindung mit dem jeweiligen isolierenden Grundkörper 26, 28 verbunden ist. Die Zwischenschicht 36 ist aus einem Werkstoff hergestellt, welcher sich vom dielektrischen Werkstoff des jeweiligen isolierenden Grundkörpers 26, 28 und vom metallischen Werkstoff der Leiter 30 unterscheidet. Die Zwischenschicht 36 ist beispielsweise aus Silber, Aluminium, Antimon, Magnesium, Zinn, Zink, Blei, Tantal oder aus einer Mischung und/oder aus mindestens einer Legierung davon hergestellt. Optional weist die Zwischenschicht 36 zusätzliche Füllstoffe, wie beispielsweise einen keramischen Werkstoff, auf.

Die Leiter 30 sind aus elektrisch leitfähigen Festkörperpartikeln hergestellt, welche mittels eines ersten thermischen Spritzverfahrens, insbesondere mittels Kaltgasspritzen, aufgesprüht sind. Die elektrisch leitfähigen Festkörperpartikel enthalten beispielsweise Kupfer, wobei mittels des ersten thermischen Spritzverfahrens eine elektrische Leitfähigkeit von mindestens 50 MS/m erzielt wird.

Die Zwischenschicht 36 ist ebenfalls aus elektrisch leitfähigen Festkörperpartikeln hergestellt, welche mittels eines zweiten thermischen Spritzverfahrens, insbesondere mittels Kaltgasspritzen, auf den isolierenden Grundkörper 26, 28 aufgesprüht sind, wobei sich das zweite thermische Spritzverfahren vom ersten thermischen Spritzverfahren unterscheidet. Insbesondere unterscheidet sich das zweite thermische Spritzverfahren vom ersten thermischen Spritzverfahren hinsichtlich einer Art der verwendeten Partikel, einer Geschwindigkeit der Partikel und/oder einer Größe der Partikel. Alternativ wird die Zwischenschicht 36 durch ein anderes Verfahren, beispielsweise durch Gießen oder durch ein galvanisches Verfahren, hergestellt. Die weitere Ausgestaltung der Wickelkopfanordnung 24 in FIG 3 entspricht der in FIG 2.

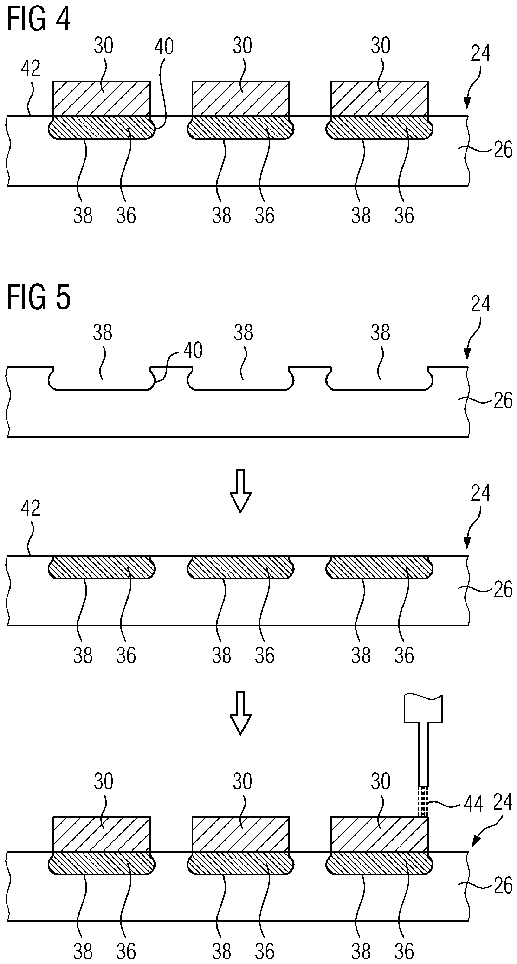

FIG 4 zeigt einen Querschnitt von Leitern 30 einer Wickelkopfanordnung 24, wobei die Leiter 30 über je eine Zwischenschicht 36 mit einem isolierenden Grundkörper 26 verbunden sind. Die Zwischenschicht 36 ist jeweils in Nuten 38 des isolierenden Grundkörpers 26 angeordnet. Die Nuten 38 weisen eine Profilierung 40 auf, über welche eine formschlüssige Verbindung mit dem isolierenden Grundkörper 26 hergestellt wird. Insbesondere ist die Nut 38 nach außen hin sich verjüngend profiliert, um eine formschlüssige Verbindung der jeweiligen Zwischenschicht 36 mit dem isolierenden Grundkörper 26 zu gewährleisten. Beispielsweise ist die Nut 38 als Hammerkopfnut oder als Schwalbenschwanznut ausgeführt. Die weitere Ausgestaltung der Wickelkopfanordnung 24 in FIG 4 entspricht der in FIG 3.

FIG 5 zeigt eine schematische Darstellung eines Verfahrens zur Herstellung einer Wickelkopfanordnung 24, wobei zunächst ein isolierender Grundkörper 26 aus einem dielektrischen Material mit Nuten 38 bereitgestellt wird. Die Nuten weisen eine Profilierung 40 auf, durch welche ein Überstand des dielektrischen Materials des isolierenden Grundkörpers 26, beispielsweise im Bereich einer Öffnung der Nut 38, entsteht.

In einem weiteren Schritt wird eine Zwischenschicht 36 in den Nuten angeordnet, welche im Wesentlichen bündig mit einer Oberfläche 42 des isolierenden Grundkörpers 26 abschließt. Die Zwischenschicht 36 wird mittels eines zweiten thermischen Spritzverfahrens, insbesondere mittels Kaltgasspritzen, auf den isolierenden Grundkörper 26 aufgesprüht. Um die Nut 38 trotz der Profilierung 40 homogen auszufüllen, werden die Partikel des zweiten thermischen Spritzverfahrens aus unterschiedlichen Richtungen in die jeweilige Nut 38 gesprüht. Alternativ wird nicht zur Erfindung gehörend die Zwischenschicht 36 auf andere Weise, beispielsweise durch Gießen oder durch ein galvanisches Verfahren, in die Nuten 38 eingebracht.

In einem weiteren Schritt werden Leiter 30 mittels eines ersten thermischen Spritzverfahrens, insbesondere mittels Kaltgasspritzen, auf die Zwischenschicht 36 aufgesprüht. Insbesondere bei der Verwendung von Partikeln aus Kupfer, welche mittels Kaltgasspritzen auf die Zwischenschicht 36 aufgesprüht werden, ermöglicht die Zwischenschicht 36 eine bessere Haftung und eine größere Partikeldichte, da die Partikel mit einer größeren Geschwindigkeit auf die Zwischenschicht 36 als auf den isolierenden Grundkörper 26 gesprüht werden können. Neben einer verbesserten Stabilität ergibt sich bei der Verwendung einer Zwischenschicht 36 für die Leiter 30 eine größere elektrische Leitfähigkeit. In einem weiteren nicht in FIG 5 dargestellten Schritt wird eine elektrische Isolation zumindest auf die Leiter 30 aufgebracht. Die weitere Ausgestaltung der Wickelkopfanordnung 24 in FIG 5 entspricht der in FIG 4.

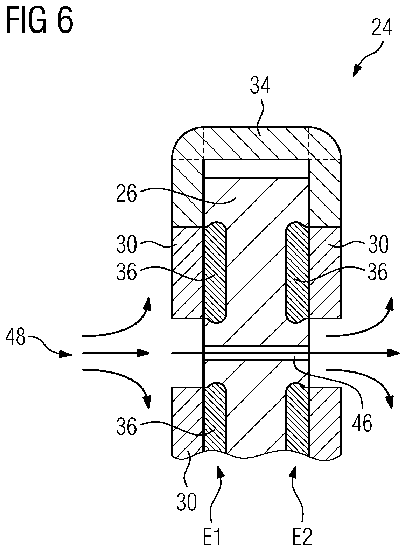

FIG 6 zeigt einen vergrößerten Querschnitt einer zweiten Ausführungsform einer Wickelkopfanordnung 24. Die Leiter 30 sind beidseitig über je eine Zwischenschicht 36 mit einem isolierenden Grundkörper 26 verbunden, wobei jeweils eine Seite des isolierenden Grundkörpers 26 mit den jeweiligen Zwischenschichten 36 und damit verbundenen Leitern 30 eine Ebene E1, E2 bildet. Die Leiter 30 der Ebenen E1, E2 sind über elektrisch leitfähige Verbindungselemente 34, welche beispielsweise aus Kupfer hergestellt sind, miteinander verbunden. Darüber hinaus weist die Wickelkopfanordnung 24 mindestens einen Kühlkanal 46 auf, um die stromdurchflossenen Leiter 30 der Wickelkopfanordnung 24 durch eine durch den mindestens einen Kühlkanal 46 fließende Kühlfluidströmung beidseitig zu kühlen. Beispielsweise ist der mindestens eine Kühlkanal 46 in Axialrichtung angeordnet. Zusätzlich oder alternativ ist der mindestens eine Kühlkanal 46 zumindest teilweise in Radialrichtung angeordnet. Als Kühlfluid sind Luft, Prozessgas, Wasser, Öl oder andere flüssige und/oder gasförmige Kühlmedien verwendbar. Die weitere Ausgestaltung der Wickelkopfanordnung 24 in FIG 6 entspricht der in FIG 5.

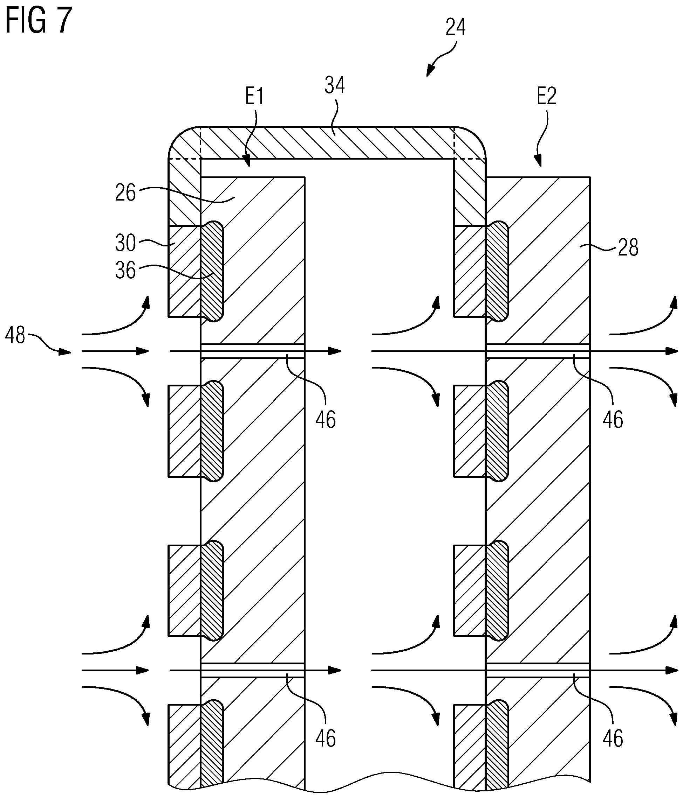

FIG 7 zeigt einen vergrößerten Querschnitt einer dritten Ausführungsform einer Wickelkopfanordnung 24, welche zwei in Axialrichtung hintereinander angeordnete Ebenen E1, E2 mit jeweils einem isolierende Grundkörper 26, 28 umfasst. Die isolierenden Grundkörper 26, 28 weisen Kühlkanäle 46 auf, wobei zumindest ein Kühlkanal 46 des ersten isolierenden Grundkörpers 26 fluidtechnisch mit zumindest einem Kühlkanal 46 des zweiten isolierenden Grundkörpers 28 verbunden ist. Die weitere Ausgestaltung der Wickelkopfanordnung 24 in FIG 7 entspricht der in FIG 6.

Zusammenfassend betrifft die Erfindung ein Verfahren zur Herstellung einer Wickelkopfanordnung 24 für eine elektrische rotierende Maschine 2 gemäß Anspruch 1. Um eine Wickelkopfanordnung 24 anzugeben, die, im Vergleich zum Stand der Technik, einfacher und kostengünstiger herzustellen ist, wird vorgeschlagen, dass die Wickelkopfanordnung 24 gemäß Anspruch 9 ausgestaltet ist und mindestens einen isolierenden Grundkörper 26, 28 aufweist, welcher zumindest teilweise aus einem dielektrischen Werkstoff hergestellt ist, wobei eine Mehrzahl von Leitern 30 aus einem metallischen Werkstoff über zumindest je eine Zwischenschicht 36 mit dem isolierenden Grundkörper 26, 28 verbunden werden, wobei die Zwischenschicht 36 aus einem Werkstoff, welcher sich vom dielektrischen Werkstoff und vom metallischen Werkstoff unterscheidet, hergestellt wird, wobei die Leiter 30 mittels eines ersten thermischen Spritzverfahrens auf die Zwischenschicht 36 aufgesprüht werden.

## Patentansprüche

1. Verfahren zur Herstellung einer Wickelkopfanordnung (24) für eine elektrische rotierende Maschine (2), wobei die Wickelkopfanordnung (24) mindestens einen isolierenden Grundkörper (26, 28) aufweist, welcher zumindest teilweise aus einem dielektrischen Werkstoff hergestellt ist,
wobei eine Mehrzahl von Leitern (30) aus einem metallischen Werkstoff über zumindest je eine Zwischenschicht (36) mit dem isolierenden Grundkörper (26, 28) verbunden werden,
wobei die Zwischenschicht (36) aus einem Werkstoff, welcher sich vom dielektrischen Werkstoff und vom metallischen Werkstoff unterscheidet, hergestellt wird,
wobei die Leiter (30) mittels eines ersten thermischen Spritzverfahrens auf die Zwischenschicht (36) aufgesprüht werden,
wobei die Zwischenschicht (36) aus Silber, Aluminium, Antimon, Magnesium, Zinn, Zink, Blei, Tantal oder aus einer Mischung und/oder aus mindestens einer Legierung davon hergestellt wird, wobei die Zwischenschicht (36) zumindest über eine formschlüssige Verbindung mit dem isolierenden Grundkörper (26, 28) verbunden wird, wobei die Zwischenschicht (36) zumindest teilweise in Nuten (38) des isolierenden Grundkörpers (26, 28) angeordnet wird, wobei die Nuten (38) des isolierenden Grundkörpers (26) eine Profilierung (40) aufweisen, über welche die formschlüssige Verbindung hergestellt wird, wobei die Zwischenschicht (36) mittels eines zweiten thermischen Spritzverfahrens auf den isolierenden Grundkörper (26, 28) aufgesprüht wird,
wobei sich das zweite thermische Spritzverfahren vom ersten thermischen Spritzverfahren unterscheidet, wobei sich das zweite thermische Spritzverfahren hinsichtlich einer Geschwindigkeit und/oder einer Größe der Partikel vom ersten thermischen Spritzverfahren unterscheidet,
wobei die Leiter (30) in zumindest zwei Ebenen (E1, E2) angeordnet werden,
wobei die Leiter (30) der zumindest zwei Ebenen (E1, E2) über Verbindungselemente (34) miteinander verbunden werden,
wobei das zweite thermische Spritzverfahren daraufhin optimiert ist, die Zwischenschicht schonend auf den dielektrischen Grundkörper aufzubringen.

2. Verfahren nach Anspruch 1,
wobei die Leiter (30) mittels Kaltgasspritzen, auf die Zwischenschicht (36) aufgesprüht werden.

3. Verfahren nach Anspruch 1,
wobei die Zwischenschicht (36) mittels des zweiten thermischen Spritzverfahrens, welches Kaltgasspritzen ist, auf den isolierenden Grundkörper (26, 28) aufgesprüht wird.

4. Verfahren nach einem der vorherigen Ansprüche,
wobei in einem weiteren Schritt eine elektrische Isolation aufgebracht wird.

5. Verfahren nach einem der vorherigen Ansprüche,
wobei Kühlkanäle (46) im isolierenden Grundkörper (26) angeordnet werden.

6. Verfahren nach einem der vorherigen Ansprüche,
wobei die Leiter (30) in zumindest zwei in Axialrichtung hintereinander angeordneten Ebenen (E1, E2) angeordnet werden.

7. Verfahren nach einem der vorherigen Ansprüche,
wobei ein dielektrischer Werkstoff mit einer Durchschlagsfestigkeit von mindestens 10 kV/mm verwendet wird.

8. Verfahren nach einem der vorherigen Ansprüche,
wobei ein metallischer Werkstoff verwendet wird, welcher eine höhere elektrische Leitfähigkeit und/oder eine höhere Festigkeit als der Werkstoff der Zwischenschicht (36) aufweist.

9. Wickelkopfanordnung (4) für eine elektrische rotierende Maschine (2), welche nach einem Verfahren gemäß einem der vorhergehenden Ansprüche hergestellt ist,
wobei die Wickelkopfanordnung (4) mindestens einen isolierenden Grundkörper (26, 28), welcher zumindest teilweise aus einem dielektrischen Werkstoff hergestellt ist, aufweist,
wobei eine Mehrzahl von Leitern (30) aus einem metallischen Werkstoff über zumindest je eine Zwischenschicht (36) mit dem isolierenden Grundkörper (26, 28) verbunden sind,
wobei die Zwischenschicht (36) aus einem Werkstoff, welcher sich vom dielektrischen Werkstoff und vom metallischen Werkstoff unterscheidet, hergestellt ist,
wobei die Leiter (30) mittels eines ersten thermischen Spritzverfahrens auf die Zwischenschicht (36) aufgesprüht sind,
wobei die Zwischenschicht (36) aus Silber, Aluminium, Antimon, Magnesium, Zinn, Zink, Blei, Tantal oder aus einer Mischung und/oder aus mindestens einer Legierung davon hergestellt ist, wobei die Zwischenschicht (36) zumindest über eine formschlüssige Verbindung mit dem isolierenden Grundkörper (26, 28) verbunden ist, wobei die Zwischenschicht (36) zumindest teilweise in Nuten (38) des isolierenden Grundkörpers (26, 28) angeordnet ist, wobei die Nuten (38) des isolierenden Grundkörpers (26) eine Profilierung (40) aufweisen, über welche die formschlüssige Verbindung hergestellt ist,
wobei die Zwischenschicht (36) mittels eines zweiten thermischen Spritzverfahrens auf den isolierenden Grundkörper (26, 28) aufgesprüht wird,
wobei sich das zweite thermische Spritzverfahren vom ersten thermischen Spritzverfahren unterscheidet, wobei sich das zweite thermische Spritzverfahren hinsichtlich einer Geschwindigkeit und/oder einer Größe der Partikel vom ersten thermischen Spritzverfahren unterscheidet,
wobei die Leiter (30) in zumindest zwei Ebenen (E1, E2) angeordnet sind,
wobei die Leiter (30) der zumindest zwei Ebenen (E1, E2) über Verbindungselemente (34) miteinander verbunden sind,
wobei das zweite thermische Spritzverfahren daraufhin optimiert ist, die Zwischenschicht schonend auf den dielektrischen Grundkörper aufzubringen.

10. Stator (8) für eine elektrische rotierende Maschine (2), welcher ein magnetfeldführendes Statorelement (18) und mindestens eine Wickelkopfanordnung (24) nach Anspruch 9 aufweist.

11. Stator (8) nach Anspruch 10,
welcher Spulenstäbe (22) aufweist, welche zumindest teilweise im magnetfeldführenden Statorelement (18) verlaufend angeordnet und mit den Leitern (30) der Wickelkopfanordnung (24) verbunden sind.

12. Stator (8) nach Anspruch 11,
wobei die Leiter (30) im Wesentlichen senkrecht zu den Spulenstäben (22) angeordnet sind.

13. Elektrische rotierende Maschine (2) mit mindestens einem Stator (8) nach einem der Ansprüche 11 bis 12.

## Claims

1. Method for producing a winding overhang assembly (24) for an electrical rotating machine (2), wherein the winding overhang assembly (24) has at least one insulating main body (26, 28), which is produced at least partly from a dielectric material,
wherein a plurality of conductors (30) made of a metal material is connected to the insulating main body (26, 28) by means of at least one intermediate layer (36) each,
wherein the intermediate layer (36) is produced from a material different from the dielectric material and from the metal material,
wherein the conductors (30) are sprayed onto the intermediate layer (36) by means of a first thermal spraying method, wherein the intermediate layer (36) is produced from silver, aluminium, antimony, magnesium, tin, zinc, lead, tantalum or from a mixture and/or from at least one alloy thereof, wherein the intermediate layer (36) is connected to the insulating main body (26, 28) by means of at least one positive connection, wherein the intermediate layer (36) is arranged at least partly in grooves (38) of the insulating main body (26, 28), wherein the grooves (38) of the insulating main body (26) have a profile (40) via which the positive connection is produced,
wherein the intermediate layer (36) is sprayed onto the insulating main body (26, 28) by means of a second thermal spraying method,
wherein the second thermal spraying method differs from the first thermal spraying method, wherein the second thermal spraying method differs from the first thermal spraying method with regard to the speed and/or size of the particles,
wherein the conductors (30) are arranged in at least two planes (E1, E2),
wherein the conductors (30) of the at least two planes (E1, E2) are connected to one another via connecting elements (34),
wherein the second thermal spraying method is optimised to gently apply the intermediate layer to the dielectric main body.

2. Method according to claim 1,
wherein the conductors (30) are sprayed onto the intermediate layer (36) by means of cold gas spraying.

3. Method according to claim 1,
wherein the intermediate layer (36) is sprayed onto the insulating main body (26, 28) by means of the second thermal spraying method, which is cold gas spraying.

4. Method according to one of the preceding claims,
wherein electrical insulation is applied in a further step.

5. Method according to one of the preceding claims,
wherein cooling channels (46) are arranged in the insulating main body (26).

6. Method according to one of the preceding claims,
wherein the conductors (30) are arranged in at least two planes (E1, E2) arranged one behind the other in the axial direction.

7. Method according to one of the preceding claims,
wherein a dielectric material with a dielectric strength of at least 10 kV/mm is used.

8. Method according to one of the preceding claims,
wherein a metal material is used which has higher electrical conductivity and/or a higher strength than the material of the intermediate layer (36).

9. Winding overhang assembly (4) for an electrical rotating machine (2), which is produced according to a method according to one of the preceding claims,
wherein the winding overhang assembly (4) has at least one insulating main body (26, 28) which is produced at least partly from a dielectric material,
wherein a plurality of conductors (30) made of a metal material are connected to the insulating main body (26, 28) by means of at least one intermediate layer (36) each,
wherein the intermediate layer (36) is produced from a material which differs from the dielectric material and from the metal material,
wherein the conductors (30) are sprayed onto the intermediate layer (36) by means of a first thermal spraying method,
wherein the intermediate layer (36) is produced from silver, aluminium, antimony, magnesium, tin, zinc, lead, tantalum or from a mixture and/or from at least one alloy thereof, wherein the intermediate layer (36) is connected to the insulating main body (26, 28) by means of at least one positive connection, wherein the intermediate layer (36) is arranged at least partly in grooves (38) of the insulating main body (26, 28), wherein the grooves (38) of the insulating main body (26) have a profile (40) via which the positive connection is produced,
wherein the intermediate layer (36) is sprayed onto the insulating main body (26, 28) by means of a second thermal spraying method,
wherein the second thermal spraying method differs from the first thermal spraying method, wherein the second thermal spraying method differs from the first thermal spraying method with regard to the speed and/or size of the particles,
wherein the conductors (30) are arranged in at least two planes (E1, E2),
wherein the conductors (30) of the at least two planes (E1, E2) are connected to one another via connecting elements (34),
wherein the second thermal spraying method is optimised to gently apply the intermediate layer to the dielectric main body.

10. Stator (8) for an electrical rotating machine (2) which has a magnetic field-guiding stator element(18) and at least one winding overhang assembly (24) according to claim 9.

11. Stator (8) according to claim 10,
which has coil rods (22) which are arranged at least partly in the magnetic field-guiding stator element (18) and are connected to the conductors (30) of the winding overhang assembly (24).

12. Stator (8) according to claim 11,
wherein the conductors (30) are arranged essentially perpendicular to the coil rods (22).

13. Electrical rotating machine (2) with at least one stator (8) according to one of the claims 11 to 12.

## Revendications

1. Procédé de fabrication d'un agencement (24) de tête d'enroulement pour une machine (2) électrique tournante, dans lequel l'agencement (24) de tête d'enroulement a au moins un corps (26, 28) de base, qui est fabriqué au moins en partie en un matériau diélectrique,
dans lequel on relie une pluralité de conducteurs (30) en un matériau métallique au corps (26, 28) de base isolant par au moins respectivement une couche (36) intermédiaire,
dans lequel on fabrique la couche (36) intermédiaire en un matériau, qui est différent du matériau diélectrique et du matériau métallique,
dans lequel on projette les conducteurs (30) sur la couche (36) intermédiaire au moyen d'un premier procédé de projection thermique,
dans lequel on produit la couche (36) intermédiaire en argent, aluminium, antimoine, magnésium, étain, zinc, plomb, tantale ou en leurs mélanges et/ou en au moins l'un de leurs alliages, dans lequel on relie la couche (36) intermédiaire au corps (26, 28) de base isolant au moins par une liaison à complémentarité de forme, dans lequel on met la couche (36) intermédiaire au moins en partie dans des rainures (38) du corps (26, 28) de base isolant, dans lequel les rainures (38) du corps (26) isolant ont un profilage (40), par lequel on produit la liaison à complémentarité de forme, dans lequel on projette la couche (36) intermédiaire sur le corps (26, 28) isolant au moyen d'un deuxième procédé de projection thermique,
dans lequel le deuxième procédé de projection thermique se distingue du premier procédé de projection thermique en ce qui concerne une vitesse et/ou une dimension des particules,
dans lequel on met les conducteurs (30) dans au moins deux plans (E1, E2),
dans lequel on relie les uns aux autres les conducteurs (30) des au moins deux plans (E1, E2) par des éléments (34) de liaison, dans lequel le deuxième procédé de projection thermique est optimisé en ce que l'on dépose la couche intermédiaire de manière ménagée sur le corps de base diélectrique.

2. Procédé suivant la revendication 1,
dans lequel on projette les conducteurs (30) sur la couche (36) intermédiaire au moyen d'une projection au gaz froid.

3. Procédé suivant la revendication 1,
dans lequel on projette la couche (36) intermédiaire sur le corps (26, 28) isolant au moyen du deuxième procédé de projection thermique, qui est une projection au gaz froid.

4. Procédé suivant l'une des revendications précédentes,
dans lequel on dépose une isolation électrique dans un autre stade.

5. Procédé suivant l'une des revendications précédentes, dans lequel on prévoit des conduits (46) de refroidissement dans le corps (26) de base isolant.

6. Procédé suivant l'une des revendications précédentes,
dans lequel on met les conducteurs (30) dans au moins deux plans (E1, E2) disposés l'un derrière l'autre dans la direction axiale.

7. Procédé suivant l'une des revendications précédentes,
dans lequel on utilise un matériau diélectrique ayant une rigidité d'au moins 10 kV/mm.

8. Procédé suivant l'une des revendications précédentes,
dans lequel on utilise un matériau métallique, qui a une conductivité électrique et/ou une résistance plus grande que le matériau de la couche (36) intermédiaire.

9. Agencement (4) de tête d'enroulement pour une machine (2) électrique tournante, qui est fabriqué par un procédé suivant l'une des revendications précédentes,
dans lequel l'agencement (4) de tête d'enroulement a au moins un corps (26, 28) de base isolant, , qui est fabriqué au moins en partie en un matériau diélectrique,
dans lequel on relie une pluralité de conducteurs (30) en un matériau métallique au corps (26, 28) de base isolant par au moins respectivement une couche (36) intermédiaire,
dans lequel on fabrique la couche (36) intermédiaire en un matériau, qui est différent du matériau diélectrique et du matériau métallique,
dans lequel on projette les conducteurs (30) sur la couche (36) intermédiaire au moyen d'un premier procédé de projection thermique,
dans lequel on produit la couche (36) intermédiaire en argent, aluminium, antimoine, magnésium, étain, zinc, plomb, tantale ou en leurs mélanges et/ou en au moins l'un de leurs alliages, dans lequel on relie la couche (36) intermédiaire au corps (26, 28) de base isolant au moins par une liaison à complémentarité de forme, dans lequel on met la couche (36) intermédiaire au moins en partie dans des rainures (38) du corps (26, 28) de base isolant, dans lequel les rainures (38) du corps (26) isolant ont un profilage (40), par lequel on produit la liaison à complémentarité de forme, dans lequel on projette la couche (36) intermédiaire sur le corps (26, 28) isolant au moyen d'un deuxième procédé de projection thermique,
dans lequel le deuxième procédé de projection thermique se distingue du premier procédé de projection thermique en ce qui concerne une vitesse et/ou une dimension des particules,
dans lequel on met les conducteurs (30) dans au moins deux plans (E1, E2),
dans lequel on relie les uns aux autres les conducteurs (30) des au moins deux plans (E1, E2) par des éléments (34) de liaison, dans lequel le deuxième procédé de projection thermique est optimisé en ce que l'on dépose la couche intermédiaire de manière ménagée sur le corps de base diélectrique.

10. Stator (8) d'une machine (2) électrique tournante, qui a un élément (18) statorique conduisant le champ magnétique et au moins un agencement (24) de tête d'enroulement suivant la revendication 9.

11. Stator (8) suivant la revendication 10,
qui a des barreaux (22) d'enroulement, qui sont disposés en s'étendant au moins en partie dans l'élément (18) statorique conduisant le champ magnétique et qui sont reliés aux conducteurs (30) de l'agencement (24) de tête d'enroulement.

12. Stator (8) suivant la revendication 11,
dans lequel les conducteurs (30) sont montés sensiblement perpendiculairement aux barreaux (22) d'enroulement.

13. Machine (2) électrique tournante ayant au moyen un stator (8) suivant l'une des revendications 11 à 12.
